# EUROPÄISCHE PATENTSCHRIFT

(11) **EP 0 754 892 B1**
(45) Veröffentlichungstag und Bekanntmachung des Hinweises auf die Patenterteilung: **13.10.1999**
(21) Anmeldenummer: 96108313.6
(22) Anmeldetag: 24.05.1996
(51) Int. Cl.: F16J 15/32

(54) **Dichtungsanordnung**
Sealing arrangement
Dispositif d'étanchéité

(30) Priorität: 18.07.1995 DE 19526127
(43) Veröffentlichungstag der Anmeldung: 22.01.1997
(73) Patentinhaber: Firma Carl Freudenberg, 69469 Weinheim (DE)
(72) Erfinder: Carnis, Patrick, 52200 Langres (FR); Bruyere, Didier, 52600 Chalindrey (FR)

(56) Entgegenhaltungen:
- FR-A- 2 019 036
- FR-A- 2 529 286
- GB-A- 2 213 210
- US-A- 5 299 811

## Beschreibung

Die Erfindung betrifft eine Dichtungsanordnung, umfassend ein Gehäuse, das von einer eine Welle umschließenden Ausnehmung durchdrungen ist, die an der engsten Stelle von einer in radialer Richtung nach innen vorspringenden ersten Stützfläche begrenzt ist sowie einen in die Ausnehmung eingefügten Wellendichtring, der im Bereich eines kreisringförmigen Halteabschnitts von einem metallischen Spannring an die erste Stützfläche angepreßt ist, wobei der Spannring an dem von dem Halteabschnitt abgewandten Ende auf einer zweiten Stützfläche eines radial nach innen vorspringenden Wulstes des Dichtgehäuses abgestützt ist, wobei der Spannring herstellungsbedingt einen größten Außendurchmesser aufweist, der größer ist als der Innendurchmesser des Wulstes und wobei der Spannring durch eine Schnappverbindung hinter dem Wulst eingeschnappt und mit der zweiten Stützflläche in Eingriff gebracht ist.

Eine solche Dichtungsanordnung ist aus der FR-A-2 019 036 bekannt. Bei der vorbekannten Dichtungsanordnung wird der Wellendichtring durch einen tellerfederförmig ausgebildeten Spannring an ein kreisringförmiges Widerlager gepreßt, das in einer nufförmigen Ausnehmung des Gehäuses angeordnet ist. Der Stützring ist auf der dem Widerlager axial abgewandten Seite des Wellendichtrings angeordnet und in einem Hinterschnitt des Gehäuses, der einen Teil der nufförmigen Ausnehmung bildet, eingeschnappt. Der Nutgrund der nufförmigen Ausnehmung erstreckt sich in axialer Richtung parallel zu Symmetrieachse der Dichtungsanordnung.

Aus der FR-A-2 529 286 ist eine weitere Dichtungsanordnung bekannt, für zwei relativ zueinander drehende, konzentrisch zueinander angeordnete Maschinenelemente. Die Dichtungsanordnung umfaßt einen Haltering, der axial einerseits auf der der ersten Stützfläche abgewandten Seite mit radial nach außen auffederbaren Federzungen versehen ist. Auf der der Stirnseite abgewandten Seite der Federzungen grenzen diese an einen zylindrisch ausgebildeten Zentrieransatz an, der entlang seiner axialen Erstreckung eine zylindrische Bohrungsfläche anliegend berührt. Der Haltering wird beim Montieren mit seinem Zentrieransatz in die Bohrung gepreßt. Eine reibungsbehaftete Montage erfolgt ab dem Moment, wenn der axial eingeschobene Haltering mit seinem Zentrieransatz die Bohrungsfläche berührt. Beim weiteren Einfügen in axialer Richtung gleitet der Zentrieransatz des Halterings reibungsbehaftet entlang der Bohrungsfläche.

Der Erfindung liegt die Aufgabe zugrunde, eine Dichtungsanordnung der eingangs genannten Art derart weiterzuentwickeln, daß die Herstellung und die Montage deutlich vereinfacht sind und sich während der Montage des Wellendichtrings in die Ausnehmung des Gehäuses eine selbsttätig Zentrierung beider Teile relativ zueinander ergibt.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es vorgesehen, daß der metallische Spannring zumindest außenseitig durch eine kegelig in Richtung der ersten Stützfläche verjüngte, erste Umfangsfläche begrenzt ist und daß die Umfangsfläche entlang ihrer gesamten axialen Erstreckung kegelförmig ausgebildet ist. Hierbei ist von Vorteil, daß sich eine exakte Positionierung des Wellendichtrings innerhalb der Ausnehmung des Gehäuses während der Montage selbsttätig einstellt. Der Wellendichtring wird in axialer Richtung so lange in die Ausnehmung eingeschoben, bis sich der kreisringförmige Halteabschnitt an die erste Stützfläche anlegt. Erst wenn der Halteabschnitt die erste Stützfläche axial anliegend berührt, kommt der Außenumfang des Halteabschnitts mit der die Ausnehmung des Gehäuses begrenzenden Umfangsfläche unter radialer Vorspannung dichtend in Berührung. Der größte Außendurchmesser des Spannrings schnappt in axialer Richtung gegenüberliegend hinter den nach innen vorspringenden Wulst des Gehäuses ein. In dieser Position ist der Wellendichtring unter axialer und radialer Vorspannung dichtend innerhalb seines Einbauraums positioniert.

Die Verwendung von PTFE als Werkstoff für den Wellendichtring hat den Vorteil, daß gleichbleibend gute Gebrauchseigenschaften während einer sehr langen Gebrauchsdauer erhalten bleiben. Dichtungen aus PTFE sind sehr verschleißarm, da der Werkstoff nach einem vernachlässigbar geringen Anfangsverschleiß glasiert und die Oberfläche dadurch sehr widerstandsfest wird. Außerdem ist von Vorteil, daß PTFE im Vergleich zu thermoplastischen Elastomerwerkstoffen während einer sehr langen Gebrauchsdauer nahezu keine Relaxationserscheinungen aufweist, sondern bestrebt ist, seine herstellungsbedingte Form nicht zu verlieren. Sowohl die radiale als auch die axiale Vorspannung des Wellendichtrings bleibt daher stets im wesentlichen unverändert erhalten.

Der Spannring besteht aus einem zähharten, metallischen Werkstoff, besipielsweise aus einem rosffreien Federstahl, um eine gleichbleibend exakte Zuordnung des Wellendichtrings innerhalb des Gehäuses während der gesamten Gebrauchsdauer zu gewährleisten. Der Spannring ist bevorzugt als Blechteil ausgeführt.

Der metallische Spannring ist zumindest außenseitig durch eine kegelig in Richtung der ersten Stützfläche verjüngte erste Umfangsfläche begrenzt. Durch die sich entgegen der Montagerichtung konisch erweiternde erste Umfangsfläche und eine entsprechend ausgebildete zweite Umfangsfläche des Gehäuses, wobei die beiden Umfangsflächen einander im Anschluß an die Montage des Wellendichtrings in die Ausnehmung flächig anliegend berühren, können herstellungsbedingte Toleranzen der Ausnehmung und/oder des Wellendichtrings problemlos ausgeglichen werden. Außerdem ist von Vorteil, daß der Wellendichtring in Montagerichtung eine radiale Ausdehnung der der ersten Stützfläche zugewandten Stirnseite aufweist, die deutlich kleiner ist, als die radiale Ausdehnung der Ausnehmung im Bereich des Wulstes des Gehäuses. Ohne Verkantungen und die Gefahr einer Beschädigung des Wellendichtrings wird dieser daher in die Ausnehmung eingeführt. Während der Montage nähern sich die erste und die zweite Umfangsfläche von Wellendichtring und Gehäuse allmählich aneinander an, wobei die beiden Teile erst in ihrer Endlage selbsttätig relativ zueinander zentriert werden. Erst unmittelbar vor dem Einschnappen des Spannrings im Gehäuse liegen die beiden Umfangsflächen aneinander an. Die gesamte Dichtungsanordnung ist daher in fertigungstechnischer und wirtschaftlicher Hinsicht einfach und kostengünstig herstellbar.

Eine einfache Montage und sichere Zentrierung des Gehäuses relativ zum Wellendichtring ist besonders dann gewährleistet, wenn die erste Umfangsfläche und die Welle, in Achsrichtung betrachtet, einen Winkel von 2 bis 8°, bevorzugt von 4 bis 6° einschließt.

Die erste Umfangsfläche gelangt nach dem Einfügen des Spannrings in das Gehäuse an einer zweiten Umfangsfläche des Gehäuses bündig zu Anlage, wobei die zweite Umfangsfläche als Begrenzungswandung der Ausnehmung ausgebildet ist. Durch die bündige und flächige Anlage der beiden Umfangsflächen aneinander, wobei sich die Anlage im wesentlichen über die gesamte axiale Länge des Spannrings erstreckt, sind Relativverlagerungen des Wellendichtrings zum Gehäuse auch dann sicher auszuschließen, wenn der Wellendichtring in axialer und/oder radialer Richtung belastet wird. Derartige Belastungen können beispielsweise entstehen wenn die Welle durch Unwuchten in radialer Richtung ausgelenkt wird und/oder die Welle einer Wärmedehnung unterliegt. Durch die axiale und radiale Verspannung des Spannrings innerhalb der Ausnehmung des Gehäuses und dem Einschnappen des Spannrings hinter dem Wulst, der eine Hinterschneidung bildet, ist eine kraft- und formschlüssige Befestigung des Wellendichtrings innerhalb der Ausnehmung des Gehäuses gegeben.

Der Spannring kann ein winkelförmiges Profil aufweisen mit einem sich radial nach innen erstreckenden Schenkel, der sich im wesentlichen parallel zu der ersten Stützfläche erstreckt. Im Hinblick auf eine einfache Herstellung der Dichtungsanordnung ist es vorgesehen, daß der Wellendichtring zweiteilig ausgebildet ist, bestehend aus einer kreisringförmigen PTFE Dichtlippe und dem Spannring, die ungebunden innerhalb der Ausnehmung angeordnet sind. Hinsichtlich der Entsorgung des Radialwellendichtrings ist eine derartige Ausgestaltung von hervorzuhebendem Vorteil, da der Wellendichtring im Anschluß an seine Demontage aus der Ausnehmung in seine beiden Bestandteile zerfällt, die getrennt voneinander recycelbar sind. Aufwendige Verfahren zur Trennung der Werkstoffe sind daher entbehrlich. Der sich radial nach innen erstreckende Schenkel des Spannrings entspricht in seinen radialen Abmessungen im wesentlichen den entsprechenden Abmessungen der ersten Stützfläche, wobei der Halteabschnitt des Wellendichtrings in axialer Richtung zwischen der ersten Stützfläche und dem Schenkel verspannt ist.

Der aus PTFE bestehende Halteabschnitt des Wellendichtrings kann zumindest auf der dem abzudichtenden Raum zugewandten Stirnseite eine kreisförmig in sich geschlossene, sich in axialer Richtung erstreckende Dichtlippe aufweisen, die an dem axial benachbarten, den Einbauraum begrenzenden Bauteil unter axialer Vorspannung dichtend abgestützt ist. Bevorzugt gelangen jedoch zwei Dichtlippen zur Anwendung, die einander konzentrisch und mit radialem Abstand benachbart zugeordnet sind. Die beiden Dichtlippen wirken als Labyrinthdichtung, wobei der durch den Abstand gebildete Radialspalt mit einem Sperrfett gefüllt sein kann.

Der Wulst und die zweite Umfangsfläche können durch eine Nut getrennt sein. Ein sicheres Einschnappen des stirnseitigen Endes des Spannrings hinter den Wulst ist dadurch sicher gewährleistet. Die Ausdehnung der Nut in axialer Richtung sollte zumindest der radialen Dicke des Spannrings entsprechen. Die Herstellung des Wulstes ist durch die Eindrehung der Nut wesentlich vereinfacht. Der Wulst kann radial innenseitig in einer Fläche enden, die in der gedachten Verlängerung der zweiten Umfangsfläche liegt. Der Spannring muß dabei im Bereich seiner Stirnseite einen radial nach außen vorspringenden Bund aufweisen, der in die Nut formschlüssig einschappbar ist.

Die erfindungsgemäße Dichtungsanordnung wird nachfolgend unter Bezugnahme auf die Fig. 1 bis 3 näher erläutert. Es zeigen:
Fig. 1 einen vergrößert dargestellten Ausschnitt aus Fig. 2,
Fig. 2 die gesamte Dichtungsanordnung in längsgeschnittener Darstellung,
Fig. 3 die Dichtungsanordnung aus Fig. 2 in einer Ansicht.

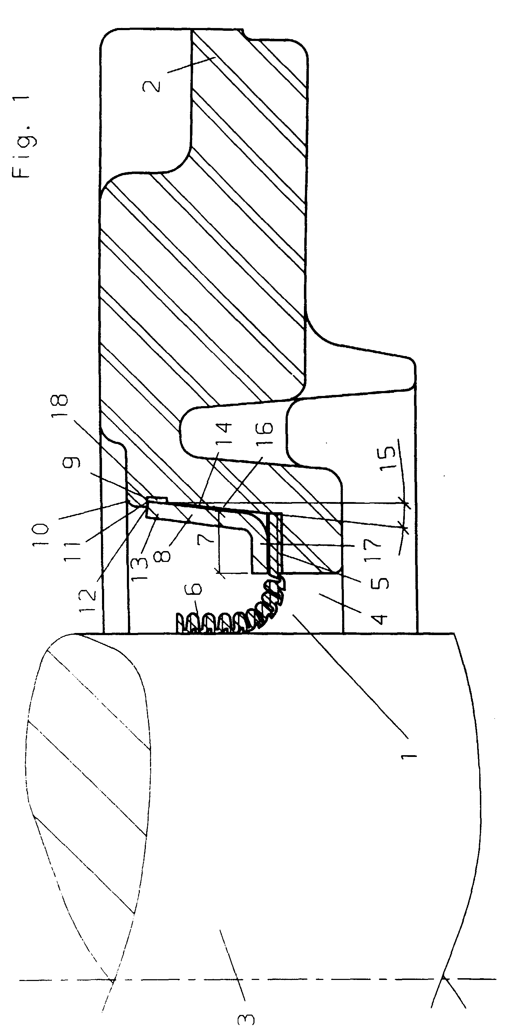

In den Fig. 1 bis 3 ist ein Ausführungsbeispiel einer erfindungsgemäßen Dichtungsanordnung gezeigt, wobei der Wellendichtring 6 als Kurbelwellendichtung für die Kurbelwelle eines Kraftfahrzeugs zur Anwendung gelangt. Die Dichtungsanordnung 1 umfaßt ein Gehäuse 2, das bevorzugt aus Aluminiumdruckguß besteht und als Kurbelwellendichtungsflansch ausgebildet ist. Das Gehäuse 2 ist von einer Ausnehmung 4 durchdrungen, die eine Welle 3 umschließt.

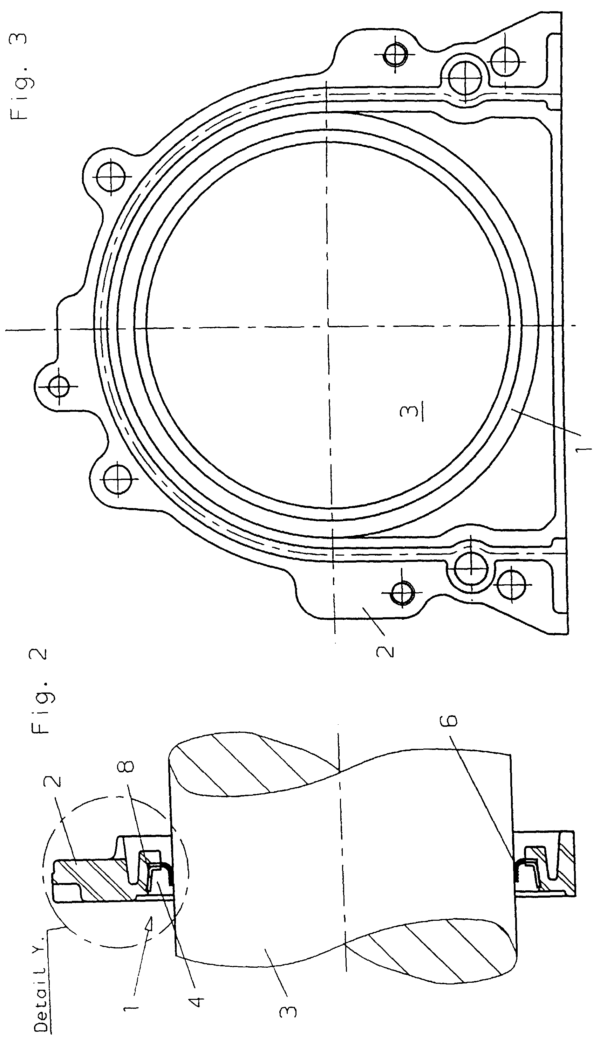

In Fig. 1 ist die Einzelheit Y aus Fig. 2 vergrößert dargestellt. Die Dichtungsanordnung besteht im wesentlichen aus einem Gehäuse 2 mit einer Ausnehmung 4, die eine Welle 3 mit radialem Abstand umschließt. Als Axialanschlag ist innerhalb des Gehäuses 2 eine in radialer Richtung nach innen vorspringende erste Stützfläche 5 vorgesehen, die eine axiale Begrenzung des Einbauraums für den Wellendichtring 6 bildet. Der Wellendichtring 6 ist zweiteilig ausgebildet und besteht im wesentlichen aus einem Spannring 8 und einer Dichtlippe aus PTFE. Der Wellendichtring 6 ist im Bereich seines kreisringförmigen Halteabschnitts 7, der sich in radialer Richtung parallel zu ersten Stützfläche 5 erstreckt, vom Spannring 8 an die erste Stützfläche 5 angepreßt. Der Spannring 8 ist unter axialer und radialer Vorspannung innerhalb der Ausnehmung angeordnet, wobei die axiale Vorspannung dadurch erzeugt wird, daß der Spannring 8 auf der dem Halteabschnitt 7 abgewandten Ende an einer zweiten Stützfläche 9 eines radial nach innen vorspringenden Wulstes 10 des Gehäuses 2 abgestützt ist. Der Spannring 8 ist mit einer Mantelfläche versehen, die in ihrem Durchmesser von der ersten Stützfläche 5 in Richtung der zweiten Stützfläche 9 kegelförmig erweitert ist. Auf der der ersten Stützfläche 5 abgewandten Seite ist der Spannring 8 durch eine Schnappverbindung 13 unter axialer und radialer Vorspannung hinter dem Wulst 10 eingeschnappt und an die zweite Stützfläche 9 angelegt.

Die erste Umfangsfläche 14 und die Welle 3 schließen - in Achsrichtung betrachtet - einen Winkel 15 ein, der in diesem Ausführungsbeispiel 5° beträgt, wobei die erste Umfangsfläche 14 des Spannrings 8 und die zweite Umfangsfläche 16 des Gehäuses 2 mit im wesentlichen gleichmäßiger Vorspannung bündig aneinander angelegt sind. Der Spannring 8 und die PTFE-Dichtlippe sind ungebunden innerhalb des Einbauraums miteinander verspannt. Hierbei ist von Vorteil, daß die Herstellung der Dichtungsanordnung einfach und kostengünstig ist und daß die Materialien des Wellendichtrings 6 im Anschluß an ihren Gebrauch einfach recycelbar sind.

In dem hier gezeigten Ausführungsbeispiel ist es vorgesehen, daß der Wulst 10 und die zweite Umfangsfläche 16 durch eine Nut 18 voneinander getrennt sind, wobei die Mantelfläche des Spannrings 8 im wesentlichen eben ausgeführt ist. Der Wulst 10 weist radial innenseitig einen geringeren Durchmesser auf, als die zweite Umfangsfläche 16, so daß dieser einen Axialanschlag für die Stirnseite des Spannrings 8 bildet.

Im Hinblick auf eine gute Abdichtung zwischen dem Wellendichtring 6 und dem Gehäuse 2 ist es vorgesehen sein, daß der Halteabschnitt 7 herstellungsbedingt radial außenseitig seinen größten Außendurchmesser aufweist, der bei Raumtemperatur 0,5 bis 1 % größer ist als der kleinste Innendurchmesser der Ausnehmung 4. Hierbei ist von Vorteil, daß eine einwandfreie Abdichtung in diesem Bereich jederzeit gewährleistet ist, da PTFE nahezu keine Relaxationserscheinungen aufweist und auch unter Vorspannung immer bestrebt ist, die herstellungsbedingten Abmessungen/Formen einzunehmen.

Der Halteabschnitt kann im Bereich seines Außenumfangs durch zumindest eine, bevorzugt zwei sich in Umfangsrichtung erstreckende Dichtkanten begrenzt sein, wobei die Dichtkanten einander mit axialem Abstand benachbart zugeordnet sein können und der Zwischenraum zwischen den Dichtkanten mit einem Sperrfett gefüllt ist. Eine verbesserte Abdichtung wird dadurch erreicht.

In Fig. 2 ist die Dichtungsanordnung 1 aus Fig. 1 in längsgeschnittener Darstellung gezeigt. Die detaillierten Einzelheiten sind Fig. 1 zu entnehmen.

In Fig. 3 ist eine Ansicht des Kurbelwellendichtflanschs aus Fig. 2 gezeigt.

## Patentansprüche

1. Dichtungsanordnung (1), umfassend ein Gehäuse (2), das von einer eine Welle (3) umschließenden Ausnehmung (4) durchdrungen ist, die an der engsten Stelle von einer in radialer Richtung nach innen vorspringenden ersten Stützfläche (5) begrenzt ist sowie einen in die Ausnehmung (4) eingefügten Wellendichtring (6), der im Bereich eines kreisringförmigen Halteabschnitts (7) von einem metallischen Spannring (8) an die erste Stützfläche (5) angepreßt ist, wobei der Spannring (8) an dem von dem Halteabschnitt (7) abgewandten Ende auf einer zweiten Stützfläche (9) eines radial nach innen vorspringenden Wulstes (10) des Gehäuses (2) abgestützt ist, wobei der Spannring (8) herstellungsbedingt einen größten Außendurchmesser (11) aufweist, der größer ist als der Innendurchmesser (12) des Wulstes (10) und wobei der Spannring (8) durch eine Schnappverbindung (13) hinter dem Wulst (10) eingeschnappt und mit der zweiten Stützfläche (9) in Eingriff gebracht ist, dadurch gekennzeichnet, daß der metallische Spannring (8) zumindest außenseitig durch eine kegelig in Richtung der ersten Stützfläche (5) verjüngte, erste Umfangsfläche (14) begrenzt ist und daß die Umfangsfläche (14) entlang ihrer gesamten axialen Erstreckung kegelförmig ausgebildet ist.

2. Dichtungsanordnung nach Anspruch 1, dadurch gekennzeichnet, daß die erste Umfangsfläche (14) und die Welle (3), in Achsrichtung betrachtet, einen Winkel (15) von 2 bis 8° einschließen.

3. Dichtungsanordnung nach einem der Ansprüche 1 bis 2, dadurch gekennzeichnet, daß die erste Umfangsfläche (14) nach dem Einschnappen des Spannrings (8) in das Gehäuse (2) an einer zweiten Umfangsfläche (16) des Gehäuses (2) bündig zur Anlage gelangt.

4. Dichtungsanordnung nach einem der Ansprüche 1 bis 3, dadurch gekennzeichnet, daß der Spannring (8) ein winkelförmiges Profil aufweist, mit einem sich radial nach innen erstreckenden Schenkel (17), der sich im wesentlichen parallel zu der ersten Stützfläche (5) erstreckt.

5. Dichtungsanordnung nach einem der Ansprüche 1 bis 4, dadurch gekennzeichnet, daß der Wulst (10) und die zweite Umfangsfläche (16) durch eine Nut (18) getrennt sind.

6. Dichtungsanordnung nach einem der Ansprüche 1 bis 5, dadurch gekennzeichnet, daß der Wulst (10) radial innenseitig in einer Fläche endet, die in der gedachten Verlängerung der zweiten Umfangsfläche (16) liegt.

## Claims

1. A sealing arrangement (1), comprising a housing (2) which is penetrated by a clearance (4) which encloses a shaft (3) and is bounded at the narrowest point by a first supporting surface (5) projecting inwards in a radial direction, as well as a shaft sealing ring (6) which is inserted into the clearance (4) and, in the region of an annular retaining portion (7), is pressed by a metallic clamping ring (8) against the first supporting surface (5), the clamping ring (8) being supported at the end facing away from the retaining portion (7) on a second supporting surface (9) of a radially inwardly projecting bead (10) of the housing (2), the clamping ring (8) having as a result of the way in which it is produced a greatest outside diameter (11) which is greater than the inside diameter (12) of the bead (10), and the clamping ring (8) snapping in by a snap connection (13) behind the bead (10) and being brought into engagement with the second supporting surface (9), characterized in that the metallic clamping ring (8) is bounded at least on the outside by a first circumferential surface (14), which tapers conically in the direction of the first supporting surface (5), and in that the circumferential surface (14) is conically formed along its entire axial extent.

2. A sealing arrangement according to claim 1, characterized in that the first circumferential surface (14) and the shaft (3), viewed in an axial direction, form an angle (15) of 2 to 8°.

3. A sealing arrangement according to either of claims 1 and 2, characterized in that, after the snap-engagement of the clamping ring (8) into the housing (2), the first circumferential surface (14) comes to bear flush against a second circumferential surface (16) of the housing (2).

4. A sealing arrangement according to any one of claims 1 to 3, characterized in that the clamping ring (8) has an angular profile, with a leg (17) which extends radially inwards and substantially parallel to the first supporting surface (5).

5. A sealing arrangement according to any one of claims 1 to 4, characterized in that the bead (10) and the second circumferential surface (16) are separated by a groove (18).

6. A sealing arrangement according to any one of claims 1 to 5, characterized in that the bead (10) ends radially on the inner side in a surface which lies in the imaginary extension of the second circumferential surface (16).

## Revendications

1. Dispositif d'étanchéité (1) comprenant un carter (2) traversé par un évidement (4) qui entoure un arbre (3) et est limité, à l'endroit le plus étroit, par une première surface d'appui (5) saillant vers l'intérieur dans la direction radiale, ainsi qu'une bague à lèvres avec ressort (6) insérée dans l'évidement (4) et qui est pressée sur la première surface d'appui (5) par une bague de serrage (8) métallique dans la région d'un segment de support (7) en forme de couronne, la bague de serrage (8) étant appuyée, à l'extrémité éloignée du segment de support (7), sur une seconde surface d'appui (9) d'un bourrelet (10) du carter (2) saillant radialement vers l'intérieur, la bague de serrage (8) étant pourvue, pour des raisons de fabrication, d'un diamètre extérieur (11) assez grand qui est supérieur au diamètre intérieur (12) du bourrelet (10) et la bague de serrage (8) étant emboîtée derrière le bourrelet (10) grâce à un assemblage par enclenchement (13) et étant mise en contact avec la seconde surface d'appui (9), caractérisé en ce que la bague de serrage (8) métallique est limitée, au moins sur le côté extérieur, par une première surface circonférentielle (14) effilée à la manière d'un cône en direction de la première surface d'appui (5) et en ce que la surface circonférentielle (14) est exécutée de manière à avoir une forme conique le long de toute son étendue axiale.

2. Dispositif d'étanchéité selon la revendication 1, caractérisé en ce que la première surface circonférentielle (14) et l'arbre (3), considérés dans la direction axiale, forment un angle (15) mesurant de 2 à 8°.

3. Dispositif d'étanchéité selon l'une des revendications 1 à 2, caractérisé en ce que la première surface circonférentielle (14) vient se mettre en contact affleuré avec une seconde surface circonférentielle (16) du carter (2) après l'emboîtement de la bague de serrage (8) dans le carter (2).

4. Dispositif d'étanchéité selon l'une des revendications 1 à 3, caractérisé en ce que la bague de serrage (8) a un profil angulaire, avec une branche (17) s'étendant de manière radiale vers l'intérieur et qui est essentiellement parallèle à la première surface d'appui (5).

5. Dispositif d'étanchéité selon l'une des revendications 1 à 4, caractérisé en ce que le bourrelet (10) et la seconde surface circonférentielle (16) sont séparés par une gorge (18).

6. Dispositif d'étanchéité selon l'une des revendications 1 à 5, caractérisé en ce que le bourrelet (10) se termine, sur le côté intérieur dans le sens radial, par une surface qui est située dans le prolongement imaginaire de la seconde surface circonférentielle (16).
